# EUROPÄISCHE PATENTSCHRIFT

(11) **EP 3 571 106 B1**
(45) Veröffentlichungstag und Bekanntmachung des Hinweises auf die Patenterteilung: **09.12.2020**
(21) Anmeldenummer: 17829991.3
(22) Anmeldetag: 28.12.2017
(51) Int. Cl.: B61D 29/00

(54) **ANORDNUNG ZUR BELEUCHTUNG EINES SCHIENENFAHRZEUGES UND SCHIENENFAHRZEUG**
SYSTEM FOR ILLUMINATING A RAIL VEHICLE AND RAIL VEHICLE
ENSEMBLE D'ÉCLAIRAGE D'UN VÉHICULE FERROVIAIRE ET VÉHICULE FERROVIAIRE

(30) Priorität: 24.02.2017 DE 102017203018
(43) Veröffentlichungstag der Anmeldung: 27.11.2019
(73) Patentinhaber: Siemens Mobility GmbH, 81739 München (DE)
(72) Erfinder: BAUER, Thomas, 91352 Hallerndorf (DE)
(86) Internationale Anmeldenummer: PCT/EP2017/084714
(87) Internationale Veröffentlichungsnummer: WO 2018/153538

(56) Entgegenhaltungen:
- DE-A1-102012 005 480
- DE-A1-102013 219 121
- DE-U1-202012 003 301
- KR-A- 20160 085 655

## Beschreibung

Die Erfindung betrifft eine Anordnung zur Beleuchtung eines Schienenfahrzeuges, sowie ein Schienenfahrzeug mit einer derartigen Anordnung.

Schienenfahrzeuge weisen ein Steuergerät zur Ansteuerung und Überwachung der Beleuchtung, insbesondere der Außenbeleuchtung, auf. Jedes Leuchtmittel ist dabei einzeln mit dem Steuergerät verbunden. Dies erfordert viel Einbauraum für die hierbei erforderlichen Komponenten und eine umfangreiche Verdrahtung über die gesamte Erstreckung des Schienenfahrzeugs, die einer erhöhten Fehleranfälligkeit unterliegt. Des Weiteren weist eine derartige über große Strecken zu verlegende Verdrahtung einen hohen Montageaufwand und eine nicht unerhebliche Masse an Kabeln auf. Ein Steuergerät ist unter anderem für die Ansteuerung und Überwachung der gesamten Beleuchtung zuständig. Bei Ausfall des Steuergerätes bedeutet dies einen kompletten Ausfall der Beleuchtung, so dass nur noch mittels Notschalter eine Notbeleuchtung aktiviert werden kann. Da das Steuergerät meist auch die Funktion einer Schnittstelle zur Leittechnik einnimmt, werden viele digitale Inputs und Outputs benötigt. Der Einbauraum in einem Führertisch eines Schienenfahrzeuges ist jedoch stark begrenzt. Daneben ist auch ein möglicher Einbauraum zur Verlegung von Kabeln im Bereich von Wänden und Decken in übrigen Bereichen des Schienenfahrzeuges beschränkt.

Das Dokument KR 2016 0085655 A beschreibt eine Vorrichtung zum Steuern einer LED-Lichtausgabe einer Diesellokomotive. Insbesondere beschreibt dieses Dokument eine Anordnung zur Beleuchtung eines Schienenfahrzeuges, aufweisend eine Energiequelle, ein Steuergerät, ein Leuchtmittel, mindestens eine elektrische Leitung zum Verbinden der Energiequelle mit dem Steuergerät und eine elektrische Leitung zum Verbinden des Steuergerätes mit dem Leuchtmittel, wobei das Leuchtmittel ein benachbartes Steuergerät aufweist.

Aufgabe der Erfindung ist es eine Anordnung zur Beleuchtung eines Schienenfahrzeuges vorzuschlagen, welche die zuvor genannten Nachteile beseitigt und eine Beleuchtung eines Schienenfahrzeuges gewährleistet, die nur wenig Einbauraum benötigt und eine geringere Fehleranfälligkeit aufweist. Des Weiteren ist es Aufgabe der Erfindung ein Schienenfahrzeug mit einer derartigen Anordnung vorzuschlagen.

Gelöst wird die Aufgabe durch den Gegenstand des unabhängigen Patentanspruchs 1 und durch den Gegenstand des unabhängigen Patentanspruchs 14. Vorteilhafte Ausgestaltungen der Erfindung sind Gegenstand von jeweils abhängigen Unteransprüchen.

Erfindungsgemäß wird eine Anordnung zum Beleuchten eines Schienenfahrzeuges bereitgestellt, welche mindestens eine Energiequelle, mindestens ein Steuergerät, sowie mindestens ein Leuchtmittel aufweist. Die Energiequelle ist mit dem mindestens einen Steuergerät über mindestens eine elektrische Leitung verbunden. Das Steuergerät wiederum ist über eine elektrische Leitung mit dem mindestens einen Leuchtmittel verbunden, wobei jedes Leuchtmittel jeweils mindestens ein benachbartes Steuergerät aufweist, und wobei das Steuergerät und das Leuchtmittel integral ausgeführt sind.

Durch die Anordnung, bei der je ein Steuergerät jeweils einen Leuchtmittel überwacht und ansteuert, kann auf eine aufwändige Verkabelung zu einem zentralen Steuergerät zur Steuerung der Beleuchtung verzichtet werden. Der Begriff Verkabelung schließt dabei nicht nur elektrische Leitungen, sondern auch die zahlreichen Klemmen und Stecker ein, die für den Anschluss jedes Leuchtmittels an ein zentrales Steuergerät notwendig sind. Vorzugsweise wird die vorgeschlagene Anordnung für die Beleuchtung einer Lokomotive, insbesondere deren Außenbeleuchtung verwendet, wobei auch eine Verwendung für die Innenbeleuchtung oder andere Verbraucher wie beispielsweise Türen oder Ähnliches denkbar sind. Durch die Reduzierung der für die Beleuchtung notwendigen Verkabelung kann ein Einbauraum beispielsweise im Führertisch der Lokomotive eingespart werden, welche nur in begrenztem Maße vorhanden ist, so dass mehr Einbauraum für andere Systeme zur Verfügung steht. Aufgrund der geringeren Anzahl an benötigten Komponenten sowie der streckenmäßig um ein Vielfaches kürzeren Verkabelung ist die Anordnung deutlich weniger fehleranfällig und weniger wartungsintensiv. Des Weiteren kann durch eine Verringerung der Anzahl an Kabeln und Anschlüssen ein Montageaufwand reduziert werden. Hierdurch kann die Herstellung oder Reparatur eines Schienenfahrzeuges beschleunigt werden.

Gemäß der Erfindung sind das Steuergerät und das Leuchtmittel integral ausgeführt. Dabei können das Steuergerät und das Leuchtmittel ineinander oder miteinander verkapselt, verschweißt, verschraubt oder vergossen sein. Das hierdurch gebildete Modul ermöglicht eine einfache Montage und das Entfallen einer separaten und aufwändigen Verkabelung des Steuergerätes mit dem Leuchtmittel. Im Falle eines Defekts kann das gesamte Modul schnell und einfach ersetzt werden. Durch die verringerte Anzahl an Komponenten können Wartungs- und Reparaturaufwand reduziert werden, wodurch die Standzeiten von Schienenfahrzeugen insgesamt stark verkürzt werden können. Das mindestens eine Leuchtmittel kann hierbei auch auswechselbar mit dem Steuergerät verbunden sein.

Gemäß einem Ausführungsbeispiel der Anordnung weist das mindestens eine Steuergerät eine Schnittstelle zu einer Leittechnik des Schienenfahrzeugs auf. Hierdurch kann das Steuergerät an die Steuerung des Schienenfahrzeuges direkt oder indirekt angeschlossen werden. Dies ermöglicht eine Informationsübertragung, so dass beispielsweise ein Ausfall eines Leuchtmittels von der Führerkabine aus erkennbar ist. Zusätzlich oder alternativ kann der Betriebsmodus (beispielsweise AN oder AUS, sowie eine mögliche Dimmfunktion) des Leuchtmittels von der Führerkabine eingesehen und gesteuert werden. Die Informationen können dem Fahrzeugführer beispielsweise in Form von analogen oder digitalen Anzeigen oder Lichtsignalen übermittelt werden. Zusätzlich kann die Leittechnik eine zusätzliche Überwachungseinrichtung aufweisen, die zwecks Wartung oder Reparatur Zustände sämtlicher Steuergeräte und damit auch aller Leuchtmittel auflisten und analysieren kann. Vorteilhafterweise kann die Leittechnik eine zusätzliche Schnittstelle zum Verbinden von Analysewerkzeugen, wie beispielsweise mit entsprechender Software ausgestattete Notebooks, Computer oder Prüfstände aufweisen.

Nach einem weiteren Ausführungsbeispiel der Anordnung zur Beleuchtung eines Schienenfahrzeuges weist die Leittechnik mindestens ein zentrales Steuergerät auf. Jedes Leuchtmittel kann somit über das jeweilige, integral oder benachbart angeordnete Steuergerät mit einem zentralen Steuergerät verbunden sein und von dem zentralen Steuergerät koordiniert werden. Das zentrale Steuergerät kann mit der Leitzentrale kommunizieren und dabei beispielsweise in der Nähe oder in einer Fahrerkabine angeordnet sein. Durch eine derartige Anordnung und die Verwendung eines integral mit einem Leuchtmittel verbundenem Steuergerät können die benötigten Mengen an Verkabelung, inklusive Klemmen, Leitungen und Steckern stark reduziert werden, da eine aufwändige Verkabelung für jedes einzelnen Leuchtmittel mit einem zentralen Steuergerät, welches gleichzeitig eine Schnittstelle für zur Leittechnik darstellt, entfällt. Darüber hinaus kann durch die dezentrale Anordnung der benachbarten oder in die Leuchtmittel integrierten Steuergeräte die Dimensionierung des zentralen Steuergerätes, welches meist im räumlich stark begrenztem Führertisch bzw. der Führerkabine angeordnet ist, wesentlich reduziert werden.

Gemäß einem weiteren Ausführungsbeispiel der Anordnung weist das mindestens eine Steuergerät des mindestens einen Leuchtmittels und das mindestens eine Steuergerät der Leittechnik drahtlose oder drahtgebundene Kommunikationsverbindung auf. Jedes Steuergerät kann dabei eine drahtlose Kommunikationsschnittstelle bzw. Kommunikationseinheit aufweisen. Mit Hilfe der Kommunikationseinheit können Informationen und Befehle übertragen werden. Es könnten beispielsweise Funk, Bluetooth, WLAN, Infrarotverbindung und derartige Übertragungstechnik verwendet werden. Hierdurch kann die Verkabelung zwecks Informationsübertragung und Steuerung bzw. Regelung der Leuchtmittel komplett entfallen. Vielmehr können die jeweiligen Steuergeräte direkt mit einem zentralen Steuergerät drahtlos kommunizieren oder über jeweils andere Steuergeräte, die alternativ oder zusätzlich als Repeater dienen, mit dem zentralen Steuergerät oder Leitzentrale kommunizieren. Hierbei können auch die vorhandenen dezentralen Steuergeräte mit einer drahtlosen Kommunikationsschnittstelle als Repeater die Informationen oder Befehle anderer Steuergeräte weiterleiten. Vorteilhafterweise können die dezentralen Steuergeräte und das mindestens eine zentrale Steuergerät gemeinsam und separat untereinander kommunizieren. Eine Verkabelung wird somit ausschließlich für die direkte Stromanbindung benötigt und kann im Vergleich zu einem Anbindungsaufwand eines kabelgebundenen bzw. drahtgebundenen Informationsübertragungssystems in deutlich reduzierter Form gestaltet werden. Eine drahtgebundene Kommunikationsverbindung oder Kommunikationsübertragung kann beispielsweise in Form eines BUS-Systems, wie beispielsweise CAN (Controller Area Network)-BUS-System, ausgeführt sein. Alternativ kann eine Kommunikationsübertragung über Lichtwellenleiter in Form von digitalen Lichtsignalen erfolgen.

Gemäß einem weiteren Ausführungsbeispiel der Anordnung weist die drahtgebundene oder drahtlose Kommunikationsverbindung eine Kodierung auf. Dabei werden eindeutige Befehle durch eine definierte Kodierung der Daten übertragen. Dies kann die Sicherheit der übertragenen Daten erhöhen, so dass die Information vor Manipulation durch Dritte geschützt werden können. Des Weiteren können die zu übertragenen Befehle und Informationen derart digital oder analog umgewandelt werden, dass im Falle einer drahtgebundenen Kommunikationsverbindung die Anzahl an elektrischen Leitungen minimiert wird.

Nach einem weiteren Ausführungsbeispiel der Anordnung sind die elektrischen Leitungen als Bus-System ausgeführt. Die jeweiligen Steuergeräte können dabei auch an bestehende BUS-Systeme angebunden werden und drahtgebunden mit der Leittechnik kommunizieren.

Gemäß einem weiteren Ausführungsbeispiel der Anordnung überwacht jedes Steuergerät mindestens ein Leuchtmittel. Jedem Leuchtmittel wird ein Steuergerät zugeordnet, das ausschließlich für die Überwachung und Ansteuerung des zugeordneten Leuchtmittels zuständig ist. Die jeweilig am den Leuchtmitteln angeordneten Steuergeräte können kleiner bzw. leistungsschwächer ausgeführt sein als beispielsweise ein zentrales Steuergerät. Dies ermöglicht, dass die Steuergeräte somit direkt neben, in oder in der Nähe des Leuchtmittels angeordnet sein können, wodurch weniger Kabellänge und Komponenten wie Klemmen und Stecker im Vergleich zu einer Anordnung mit einem zentralen Steuergerät notwendig sind.

Gemäß einem weiteren Ausführungsbeispiel der Anordnung kann das Leuchtmittel aus mehreren Lichtquellen bestehen. Durch das Vorhandensein einer Redundanz durch mehrere Lichtquellen kann die Betriebssicherheit erhöht werden. Bei einem Ausfall einer Lichtquelle eines Leuchtmittels kann das Schienenfahrzeug weiterhin durch die verbleibenden Lichtquellen in dem Leuchtmittel, eventuell bei leichten Einbußen in der Helligkeit, beleuchtet werden, ohne dass direkt auf einen Notbeleuchtung umgeschaltet werden muss.

Gemäß einem weiteren Ausführungsbeispiel der Anordnung ist das Leuchtmittel in LED-Technik, Xenon, halogen HDI-Technik ausgeführt. Hierdurch bieten sich sehr vielseitige Einsatzmöglichkeiten. LED-Leuchtmittel sind beispielsweise sehr sparsam und langlebig. Xenon-Lampen können sehr leistungsfähig sein um beispielsweise weg weitreichend zu beleuchten und eignen sich gut als Fahrtrichtungsbeleuchtung. Darüber hinaus sind Kombinationen von mehreren unterschiedlichen Leuchtmittelarten in einem oder mehreren Leuchtmitteln entsprechend dem Einsatzbereich möglich. LEDs können beispielsweise derart mit einem dezentralen Steuergerät verbunden sein, dass ein Auswechseln nicht möglich ist. Beispielsweise können beide Bauelemente miteinander vergossen oder verklebt sein. Alternativ können Leuchtmittel bzw. einzelne Lichtquellen in ein dezentrales Steuergerät integriert sein. Hierdurch kann ein verbesserter Schutz vor Umwelteinflüssen und eine einfachere Herstellung realisiert werden.

Nach einem weiteren Ausführungsbeispiel der Anordnung zum Beleuchten eines Schienenfahrzeuges weist jedes Leuchtmittel eine eigene Sicherung auf. Bei einem Ausfall der Beleuchtung kann die Suche der Fehlerquelle hierdurch wesentlich eingegrenzt und damit verkürzt werden, da man die Sicherungen den jeweiligen Leuchtmitteln zuordnen kann. Dies erhöht zusätzlich die Betriebssicherheit der Beleuchtung des Schienenfahrzeuges.

Gemäß einem weiteren Ausführungsbeispiel der Anordnung ist die Sicherung des Leuchtmittels manuell oder automatisch betätigbar. Die Sicherung kann beispielsweise als Sicherungsautomat ausgeführt sein, der selbstständig bei zu hoher Belastung aktivierbar ist. Ein derartiger Sicherungsautomat kann beispielsweise direkt oder indirekt per Schalter oder über Fernsteuerung wieder deaktivierbar sein.

Gemäß einem weiteren Ausführungsbeispiel der Anordnung ist das mindestens eine Leuchtmittel durch das Steuergerät in mindestens einen Betriebszustand versetzbar. Jeweils abhängig von verschiedenen Situationen können unterschiedliche Betriebszustände bzw. Lichtsignale für den sicheren Betrieb eines Schienenfahrzeugs notwendig sein. Beispielsweise kann beim Rückwärtsfahren eines Schienenfahrzeuges eine andere Beleuchtung erforderlich sein als bei einer vorwärts gerichteten Fahrtrichtung. Dies kann insbesondere bei Schienenfahrzeugen mit an beiden Enden angeordneten Triebwagen von Vorteil sein. Vorteilhafterweise kann das Steuergerät das Leuchtmittel beispielsweise dimmen, anschalten oder ausschalten. Darüber hinaus sind weitere Signale wie Blinken oder ähnliches möglich. Das dezentrale Steuergerät kann beispielsweise durch eine direkte bzw. aktive Ansteuerung oder automatisch durch beispielsweise einen identifizierten Betriebszustand des Schienenfahrzeuges einen Betriebszustand des Leuchtmittels bestimmen.

Gemäß einem weiteren Ausführungsbeispiel der Anordnung zum Beleuchten eines Schienenfahrzeuges ist ein Betriebszustand beispielsweise ein Notbeleuchtungszustand, Tagbeleuchtungszustand oder Nachtbeleuchtungszustand. Es sind verschiedene Beleuchtungsmodi möglich die je nach Betriebsart bzw. Tageszeit- oder Helligkeitsanforderungen die Beleuchtung des Schienenfahrzeuges unterschiedlich regeln. Die Beleuchtungsmodi können dabei mit dem Betriebsmodus des Schienenfahrzeuges koppelbar sein. Dabei kann eine automatische Anpassung der Beleuchtung an die jeweiligen Außenbedingungen des Schienenfahrzeuges erfolgen. Durch Helligkeitssensoren könnte die Helligkeit im Umfeld des Schienenfahrzeuges erfasst und als Signal über das zentrale Steuergerät an die separaten bzw. dezentralen Steuergeräte der jeweiligen Leuchtmittel weitergeleitet werden. Die Steuergeräte können anschließend das Signal in einen Betriebszustand der Leuchtmittel umsetzen. Alternativ oder zusätzlich können auch andere Sensoren wie Temperatursensoren oder Geschwindigkeitssensoren zusätzliche Informationen ermitteln, die anschließend von den Steuergeräten verarbeitet werden. So könnte beim Einfahren in einen Tunnel die Leuchtmittel des Schienenfahrzeuges automatisch angehen oder ihr Lichtsignale verstärken und beim Verlassen des Tunnels wieder automatisch abgedimmt werden.

Nach einem weiteren Aspekt der Erfindung wird ein Schienenfahrzeug mit mindestens einem angetriebenen oder nicht angetriebenen Wagen mit einer Anordnung zum Beleuchten eines Schienenfahrzeuges bereitgestellt. Die Anordnung weist mindestens eine Energiequelle, mindestens ein Steuergerät, sowie mindestens ein Leuchtmittel auf. Die Energiequelle ist mit dem mindestens einen Steuergerät über mindestens eine elektrische Leitung verbunden. Das Steuergerät wiederum ist über eine elektrische Leitung mit dem mindestens einen Leuchtmittel verbunden, wobei jedes Leuchtmittel mindestens ein benachbartes Steuergerät aufweist.

Die oben beschriebenen Eigenschaften, Merkmale und Vorteile dieser Erfindung sowie die Art und Weise, wie diese erreicht werden, werden klarer und deutlicher verständlich durch die Erläuterung der folgenden stark vereinfachten schematischen Darstellungen bevorzugter Ausführungsbeispiele. Hierbei zeigen
- FIG 1: eine schematische Darstellung einer Anordnung gemäß einem ersten Ausführungsbeispiel und
- FIG 2: eine schematische Darstellung einer Anordnung gemäß einem zweiten Ausführungsbeispiel.

In den Figuren weisen dieselben konstruktiven Elemente jeweils dieselben Bezugsziffern auf.

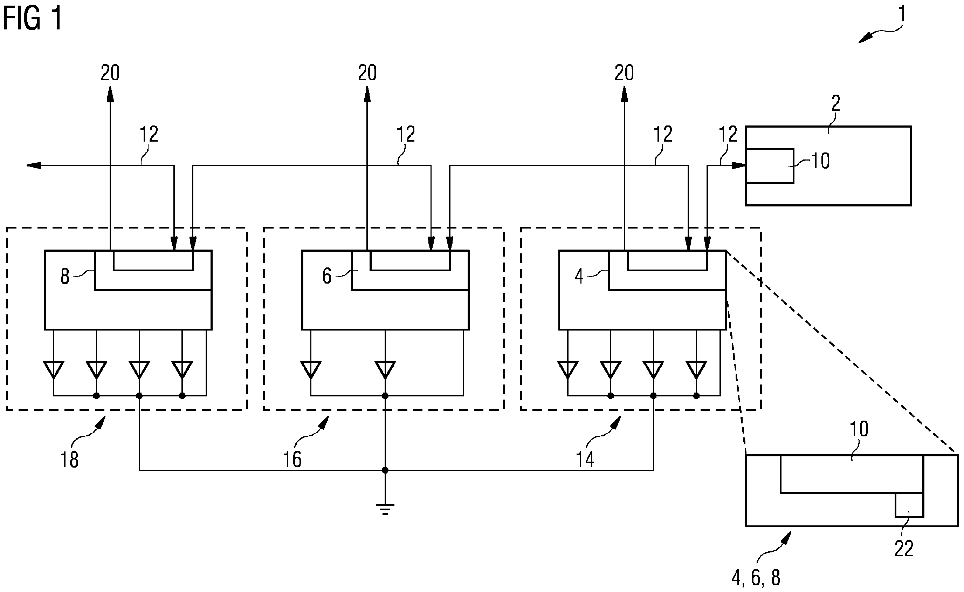

Die FIG 1 zeigt eine schematische Darstellung einer Anordnung 1 zur Beleuchtung eines Schienenfahrzeuges gemäß dem ersten Ausführungsbeispiel. Die Anordnung 1 ist als ein Schaltdiagramm dargestellt und soll eine Anbindung der relevanten Komponenten eines Schienenfahrzeuges verdeutlichen. Die Anordnung 1 weist ein zentrales Steuergerät 2 auf, welches mit einer nicht dargestellten Leittechnik verbunden ist und in einem Bereich einer Führerkabine angeordnet sein kann. Des Weiteren weist die Anordnung 1 mehrere separate Steuergeräte 4, 6, 8 auf. Die separaten Steuergeräte 4, 6, 8 weisen jeweils eine eigenständige Kommunikationseinheit 10 auf. Durch die Kommunikationseinheit 10 können die separaten Steuergeräte 4, 6, 8 untereinander und mit dem zentralen Steuergerät 2 verbunden werden. Das zentrale Steuergerät 2 weist ebenfalls eine Kommunikationseinheit 10 auf. Durch eine Kommunikationsverbindung 12 lassen sich Informationen und Befehle austauschen. Die Befehle können hierbei digitale oder analoge Steuerbefehle oder Regelungsbefehle sein, die bestimmte Funktionen oder Betriebszustände auslösen oder melden. Die Kommunikationsverbindung 12 ist gemäß dem Ausführungsbeispiel ein drahtgebundenes BUS-System 12. Das BUS-System 12 verbindet gemäß dem Ausführungsbeispiel nicht jedes separate bzw. dezentrale Steuergerät 4, 6, 8 mit dem zentralen Steuergerät 2. Die separaten Steuergeräte 4, 6, 8 sind vielmehr in einer Reihenschaltung durch das BUS-System 12 verbunden. Hierdurch muss das BUS-System lediglich einmal entlang der benötigten Länge verlegt werden und nicht für jedes einzelne Steuergerät 4, 6, 8 separat und somit mehrfach parallel nebeneinander. Jedes separate Steuergerät 4, 6, 8 weist mehrere angeschlossene Leuchtmittel 14, 16, 18 auf. Die Steuergeräte 4, 6,8 sind hierbei integral mit den Leuchtmitteln 14, 16, 18 ausgeführt. Die Leuchtmittel 14 sind beispielsweise an einem vorderen Ende eines Schienenfahrzeuges angeordnete Scheinwerfer, Richtungsanzeiger bzw. Positionsleuchten und wahlweise zuschaltbare Rückleuchten. Die Leuchtmittel 18 können analog zu den Leuchtmittel 14 an einem hinteren Ende eines Schienenfahrzeuges angeordnet sein. Die Leuchtmittel 16 können in einem Außenbereich eines Schienenfahrzeuges angeordnet sein und eine Umgebung des Schienenfahrzeuges beleuchten um einen Ausstieg zu erleichtern. Alternativ oder zusätzlich können die Leuchtmittel 16 auch innerhalb von Wagons des Schienenfahrzeuges angeordnet sein und als Innenbeleuchtung dienen. Jedes der separaten Steuergeräte 4, 6, 8 ist unabhängig von dem BUS-System 12 an eine Energieversorgung 20 angebunden. Die separaten Steuergeräte 4, 6, 8 können somit abhängig oder unabhängig von einem über das BUS-System übermittelten Signal die Leuchtmittel 14, 16, 18 ansteuern. Beispielsweise können die separaten Steuergeräte 4, 6, 8 die Leuchtmittel 14, 16, 18 bei einem fehlenden Signal in einen Notbeleuchtungszustand versetzen. Bei einem Start des Schienenfahrzeuges oder während einer Startphase können die separaten Steuergeräte 4, 6, 8 von dem zentralen Steuergerät 2 entsprechende Informationen erhalten und die Beleuchtung möglichst stromsparend einsetzen, sodass das Schienenfahrzeug schneller betriebsbereit wird. Des Weiteren kann das zentrale Steuergerät 2 einen Betriebszustand des Schienenfahrzeuges wie beispielsweise eine Fahrtrichtung, einen Stillstand, oder einen Halt in einem Bahnhof über das BUS-System 12 übermitteln. Abhängig von dem Betriebszustand des Schienenfahrzeuges können die separaten Steuergeräte 4, 6, 8 die Leuchtmittel 14, 16, 18 ansteuern und somit die Leuchtmittel 14, 16, 18 gemeinsam oder separat einschalten, ausschalten, abdunkeln bzw. erhellen oder ein Blinken der Leuchtmittel 14, 16, 18 einleiten. Damit eine Betriebssicherheit der separaten Steuergeräte 4, 6, 8 gewährleistet werden kann weisen die separaten Steuergeräte 4, 6, 8 mindestens eine Sicherung 22 auf. Die Sicherung 22 wird ausgelöst, wenn im Bereich des jeweiligen separaten Steuergerätes 4, 6, 8 oder der jeweiligen Leuchtmittel 14, 16, 18 ein Kurzschluss oder ein Defekt auftritt. Abhängig von einem Auslösen der jeweiligen Sicherung 22 können die jeweiligen separaten Steuergeräte 4, 6, 8 eine Information über das Auslösen der Sicherung 22 und den Ort der Sicherung 22 an das zentrale Steuergerät 2 und somit indirekt auch an die Leittechnik des Schienenfahrzeuges übermitteln.

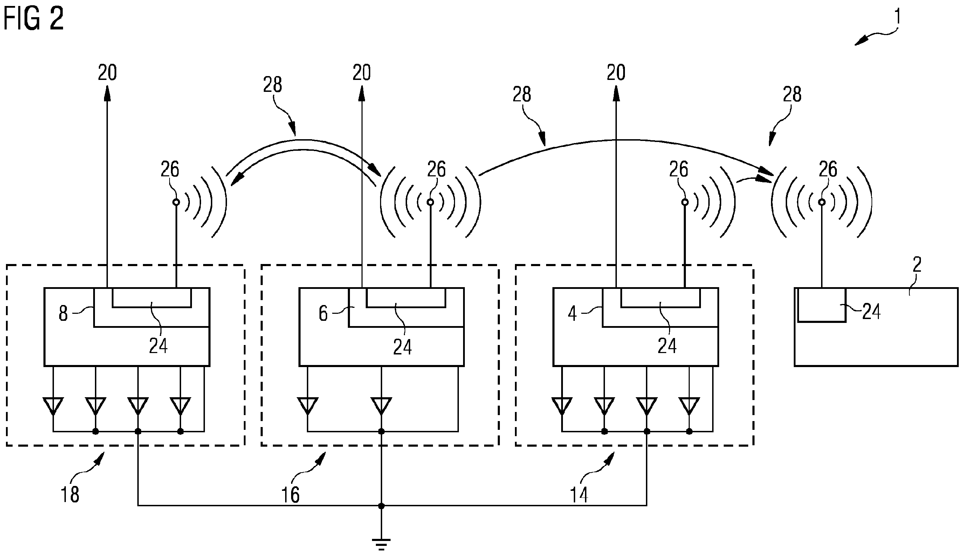

In FIG.2 ist eine schematische Darstellung einer Anordnung 1 gemäß einem zweiten Ausführungsbeispiel dargestellt. Im Unterschied zu der Anordnung 1 gemäß dem ersten Ausführungsbeispiel weisen die dezentralen Steuergeräte 4, 6, 8 und das zentrale Steuergerät 2 jeweils drahtlose Kommunikationseinheiten 24 auf. Jede drahtlose Kommunikationseinheit 24 weist eine Funkantenne 26 auf. Somit kann die Kommunikationseinheit 24 mittels Funksignalen Informationen senden und empfangen. Die drahtlose Verbindung 28 bzw. drahtlose Kommunikationsverbindung 28 kann hierbei zwischen den dezentralen Steuergeräten 4, 6, 8 untereinander hergestellt werden. Jedes dezentrale Steuergerät 4, 6, 8 kann hierbei auch separat eine drahtlose Verbindung 28 mit dem zentralen Steuergerät 2 herstellen. Eine Herstellung der drahtlosen Verbindung 28 mit dem zentralen Steuergerät 2 kann hierbei auch indirekt über ein in einem Funkweg liegendes oder benachbartes Steuergerät 4, 6, 8 erfolgen. Hierbei können die Kommunikationseinheiten 24 der Steuergeräte 4, 6, 8 als Signalverstärker agieren. So können Informationen oder Befehle von dem zentralen Steuergerät 2 zu einem dezentralen Steuergerät 4, 6, 8 hin gesendet werden. Dies kann auch über lange Strecken wie beispielsweise bei langen Schienenfahrzeugen ohne drahtgebundene Kommunikation erfolgen. In umgekehrter Richtung kann ebenfalls die Informationsübertragung über mehrere Steuergeräte 4, 6, 8 hinweg seriell realisiert werden. So können Befehle oder Informationen von einer drahtlosen Kommunikationseinheit 24 zu einer benachbarten drahtlosen Kommunikationseinheit 24 übertragen werden, die wiederum zu einer nächsten drahtlosen Kommunikationseinheit 24 die Befehle oder Informationen weiterleitet. Dieser Vorgang kann solange erfolgen, bis die Informationen bzw. Befehle von dem zentralen Steuergerät 2 empfangen werden können.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann im Rahmen der Ansprüche abgeleitet werden, ohne den Schutzumfang der Erfindung zu verlassen.

## Patentansprüche

1. Anordnung (1) zur Beleuchtung eines Schienenfahrzeuges, aufweisend mindestens eine Energiequelle (20), mindestens ein Steuergerät (4, 6, 8), mindestens ein Leuchtmittel (14, 16, 18), mindestens eine elektrische Leitung zum Verbinden der Energiequelle (20) mit dem mindestens einen Steuergerät (4, 6, 8) und eine elektrische Leitung zum Verbinden des Steuergerätes (4, 6, 8) mit dem mindestens einem Leuchtmittel (14, 16, 18),
- bei der jedes Leuchtmittel (14, 16, 18) jeweils mindestens ein benachbartes Steuergerät (4, 6, 8) aufweist, und
- bei der das Steuergerät (4, 6, 8) und das Leuchtmittel (14, 16, 18) integral ausgeführt sind.

2. Anordnung nach Anspruch 1, bei der das mindestens eine Steuergerät (4, 6, 8) eine Schnittstelle (10,24) zu einer Leittechnik des Schienenfahrzeugs aufweist.

3. Anordnung nach einem der Ansprüche 1 bis 2, bei der die Leittechnik mindestens ein zentrales Steuergerät (2) aufweist

4. Anordnung nach einem der Ansprüche 1 bis 3, bei der das mindestens eine Steuergerät (4, 6, 8) des mindestens einen Leuchtmittels (14, 16, 18) und das mindestens eine Steuergerät (2) der Leittechnik drahtlose oder drahtgebundene Kommunikationsverbindung (12, 28) aufweisen.

5. Anordnung nach einem der Ansprüche 1 bis 4, bei der die drahtgebundene oder die drahtlose Kommunikationsverbindung (12, 28) eine Kodierung aufweist.

6. Anordnung nach einem der Ansprüche 1 bis 5, bei der die elektrischen Leitungen als Bus-System ausgeführt sind.

7. Anordnung nach einem der Ansprüche 1 bis 6, bei der jedes Steuergerät (4, 6, 8) mindestens ein Leuchtmittel (14, 16, 18) überwacht.

8. Anordnung nach einem der Ansprüche 1 bis 7, bei der das mindestens eine Leuchtmittel (14, 16, 18) eine oder mehrere Lichtquellen aufweist.

9. Anordnung nach einem der Ansprüche 1 bis 8, bei der das mindestens eine Leuchtmittel (14, 16, 18) in LED-, Xenon- oder Halogen-Technik ausgeführt ist.

10. Anordnung nach einem der Ansprüche 1 bis 9, bei der jedes Leuchtmittel (14, 16, 18) eine eigene Sicherung (22) aufweist.

11. Anordnung nach Anspruch 10, bei der die Sicherung (22) manuell oder automatisch betätigbar ist.

12. Anordnung nach einem der Ansprüche 1 bis 11, bei der das mindestens eine Leuchtmittel (14, 16, 18) durch das Steuergerät (4, 6, 8) in mindestens einen Betriebszustand versetzbar ist.

13. Anordnung nach Anspruch 12, bei der ein Betriebszustand ein Notbeleuchtungszustand, Tagbeleuchtungszustand oder Nachtbeleuchtungszustand ist.

14. Schienenfahrzeug mit einer Anordnung (1) nach einem der vorhergehenden Ansprüche, mit mindestens einem angetriebenen oder nicht-angetriebenen Wagen.

## Claims

1. Arrangement (1) for lighting a rail vehicle, having at least one energy source (20), at least one controller (4, 6, 8), at least one lighting means (14, 16, 18), at least one electrical line for connecting the energy source (20) to the at least one controller (4, 6, 8) and an electrical line for connecting the controller (4, 6, 8) to the at least one lighting means (14, 16, 18),
- in which each lighting means (14, 16, 18) in each case has at least one adjacent controller (4, 6, 8), and
- in which the controller (4, 6, 8) and the lighting means (14, 16, 18) are configured so as to be integral.

2. Arrangement according to Claim 1, in which the at least one controller (4, 6, 8) has an interface (10, 24) to control technology of the rail vehicle.

3. Arrangement according to either of Claims 1 and 2, in which the control technology has at least one central controller (2).

4. Arrangement according to one of Claims 1 to 3, in which the at least one controller (4, 6, 8) of the at least one lighting means (14, 16, 18) and the at least one controller (2) of the control technology have a wireless or wired communication connection (12, 28).

5. Arrangement according to one of Claims 1 to 4, in which the wired or wireless communication connection (12, 28) has coding.

6. Arrangement according to one of Claims 1 to 5, in which the electrical lines are configured as a bus system.

7. Arrangement according to one of Claims 1 to 6, in which each controller (4, 6, 8) monitors at least one lighting means (14, 16, 18) .

8. Arrangement according to one of Claims 1 to 7, in which the at least one lighting means (14, 16, 18) has one or more light sources.

9. Arrangement according to one of Claims 1 to 8, in which the at least one lighting means (14, 16, 18) is configured using LED technology, xenon technology or halogen technology.

10. Arrangement according to one of Claims 1 to 9, in which each lighting means (14, 16, 18) has a dedicated fuse (22).

11. Arrangement according to Claim 10, in which the fuse (22) is able to be actuated manually or automatically.

12. Arrangement according to one of Claims 1 to 11, in which the at least one lighting means (14, 16, 18) is able to be put into at least one operating state by the controller (4, 6, 8).

13. Arrangement according to Claim 12, in which an operating state is an emergency lighting state, daytime lighting state or night-time lighting state.

14. Rail vehicle having an arrangement (1) according to one of the preceding claims, having at least one driven or non-driven car.

## Revendications

1. Ensemble (1) d'éclairage d'un véhicule ferroviaire, comportant au moins une source d'énergie (20), au moins un module de commande (4, 6, 8) , au moins un moyen d'éclairage (14, 16, 18), au moins une conduite électrique pour relier la source d'énergie (20) à l'au moins un module de commande (4, 6, 8) et une conduite électrique pour relier le module de commande (4, 6, 8) à l'au moins un moyen d'éclairage (14, 16, 18),
- dans lequel chaque moyen d'éclairage (14, 16, 18) comporte un module de commande adjacent (4, 6, 8) chacun, et
- dans lequel le module de commande (4, 6, 8) et le moyen d'éclairage (14, 16, 18) sont solidaires l'un de l'autre.

2. Ensemble selon la revendication 1, dans lequel l'au moins un module de commande (4, 6, 8) comporte une interface (10, 24) le reliant à un poste contrôle-commande du véhicule ferroviaire.

3. Ensemble selon l'une des revendications 1 à 2, dans lequel le poste contrôle-commande comporte au moins un module de commande (2) central.

4. Ensemble selon l'une des revendications 1 à 3, dans lequel l'au moins un module de commande (4, 6, 8) de l'au moins un moyen d'éclairage (14, 16, 18) et l'au moins un module de commande (2) du poste contrôle-commande comporte une connexion de communication (12, 28) sans fil ou avec fil.

5. Ensemble selon l'une des revendications 1 à 4, dans lequel la connexion de communication (12, 28) sans fil ou avec fil comporte un codage.

6. Ensemble selon l'une des revendications 1 à 5, dans lequel les conduites électriques sont exécutées sous forme de système de bus.

7. Ensemble selon l'une des revendications 1 à 6, dans lequel chaque module de commande (4, 6, 8) contrôle au moins un moyen d'éclairage (14, 16, 18).

8. Ensemble selon l'une des revendications 1 à 7, dans lequel l'au moins un moyen d'éclairage (14, 16, 18) comporte une ou plusieurs sources de lumière.

9. Ensemble selon l'une des revendications 1 à 8, dans lequel l'au moins un moyen d'éclairage (14, 16, 18) est réalisé en technique LED, xénon ou halogène.

10. Ensemble selon l'une des revendications 1 à 9, dans lequel chaque moyen d'éclairage (14, 16, 18) comporte son propre fusible.

11. Ensemble selon la revendication 10, dans lequel le fusible (22) est actionnable manuellement ou automatiquement.

12. Ensemble selon l'une des revendications 1 à 11, dans lequel l'au moins un moyen d'éclairage (14, 16, 18) peut être commuté par le module de commande (4, 6, 8) en au moins un état de marche.

13. Ensemble selon la revendication 12, dans lequel un état de marche est un état d'éclairage de secours, un état d'éclairage de jour ou un état d'éclairage de nuit.

14. Véhicule ferroviaire comportant un ensemble (1) selon l'une des revendications précédentes, comportant au moins un véhicule propulsé ou non-propulsé.
